# EUROPÄISCHE PATENTSCHRIFT

(11) **EP 3 650 157 B1**
(45) Veröffentlichungstag und Bekanntmachung des Hinweises auf die Patenterteilung: **31.05.2023**
(21) Anmeldenummer: 18205528.5
(22) Anmeldetag: 09.11.2018
(51) Int. Cl.: B23K 9/028, B23K 9/095, B23K 9/16, B23K 37/02, B23K 101/06

(54) **ORBITALSCHWEISSVORRICHTUNG MIT VEREINFACHTER HANDHABUNG**
ORBITAL WELDING DEVICE WITH SIMPLIFIED HANDLING
DISPOSITIF DE SOUDAGE ORBITAL À MANIPULATION SIMPLIFIÉE

(43) Veröffentlichungstag der Anmeldung: 13.05.2020
(60) Teilanmeldung: 21171133.8
(73) Patentinhaber: Illinois Tool Works, Inc., Glenview, Illinois 60025 (US)
(72) Erfinder: TAMM, Markus, 88662 Überlingen (DE); FOH, Marcel, 88677 Markdorf (DE)
(74) Vertreter: HGF

(56) Entgegenhaltungen:
- EP-A1- 2 027 962
- EP-B1- 1 335 809
- WO-A1-2016/153562
- DE-B3-102004 045 348
- KR-B1- 101 224 878
- US-A- 5 571 431
- US-A- 5 837 966
- US-A1- 2004 238 496
- US-A1- 2007 210 047
- US-A1- 2016 125 594

## Beschreibung

Die Erfindung betrifft allgemein Orbitalschweißvorrichtungen der sog. geschlossenen Bauform, welche einen Schweißkopf mit Kammer für Schutzgas um die zu verschweißenden Rohrenden bilden.

Der Stand der Technik US20100051586A1 zeigt einen Vertreter dieser speziellen Schweißvorrichtungen. Diese Art von Schweißvorrichtungen finden besonders im medizintechnischen oder lebensmitteltechnischen Bereich Anwendung, wo es auf schutzgasgeschweißte, hochwertige Schweißnähte unter Verwendung rostfreier Stähle ankommt bei oft auch sehr kleinen Rohrdurchmesser (wenige cm). Dementsprechend zeichnet sich diese Bauform durch kompakte Maße und Handlichkeit aus.

Aus der US 2004/0238496 A1, welche die Basis für den Oberbegriff der unabhängigen Ansprüche darstellt, geht eine Orbitalschweißvorrichtung der geschlossenen Bauform hervor, welche einen Schweißkopf mit einer Kammer für Schutzgas aufweist, um die zu verschweißenden Rohrenden einzufassen.

Die US 5,837,966 offenbart einen Orbitalschweißkopf mit einer Lichtquelle und einem optischen Sensor, so dass beim Positionieren des Orbitalschweißkopfes ein Stoßbereich zweier zu verschweißender Rohrenden erfasst werden kann.

Aus der EP 2 027 962 A1 geht eine Orbitalschweißvorrichtung hervor, bei welcher mittels eines Temperatursensors die Temperatur im Bereich eines Schweißbades gemessen und eine Regelungseinrichtung zugeführt wird.

In der KR 101224878 B1 ist eine Orbitalschweißvorrichtung mit einem Temperatursensor und einem Neigungssensor beschrieben.

Aus der US 2007/0210047 A1 geht eine Orbitalschweißvorrichtung mit einer Lichtquelle und einem optischen Sensor hervor, welche sich automatisch an Rohre klemmt, wenn mit dem Sensor eine korrekt ausgerichtete Position eines Schweißkopfes der Orbitalschweißvorrichtung festgestellt wird.

In der US 5,571,431 wird eine Orbitalschweißvorrichtung beschrieben, bei welcher eine Geschwindigkeit, mit der eine Schweißelektrode bewegt wird, automatisch gesteuert wird.

Aus der US 2016/0125594 A1 geht ein System und Verfahren zum Steuern eines Schweißsystems hervor, welches eine Lichtquelle und eine Kammer aufweist, wobei die einzelnen Komponenten des Schweißsystems mit reflektierenden, sichtbaren Markierungen versehen sind, welche mit der Kammer erfasst werden.

Aus der DE 10 2004 045 348 B3 geht ein Verfahren zur Ermittlung der Drehmomentkonstante von permanentmagnetisch erregten Gleichstrommotoren hervor.

Die Erfinder befanden als nachteilig, dass die Handhabung dieser speziellen Schweißvorrichtungen Schwachstellen aufweist. So muss ein Benutzer z.B. eine Startposition definieren, je nachdem, wie der Benutzer den Schweißkopf an das Rohr geklemmt hat, den Elektrodendrehmechanismus des Schweißkopfes kalibrieren oder es kommt zu unerwarteten Ausfällen, wenn Wartungsintervalle nicht eingehalten werden.

Die der Erfindung zu Grunde liegende Aufgabe war es, diesen Nachteil zu verbessern. Die Aufgabe wird durch die Erfindung, insbesondere wie sie in den unabhängigen Ansprüchen definiert ist, gelöst.

Insbesondere wird diese Aufgabe gelöst durch eine in einer geschlossenen Bauform ausgebildeten Orbitalschweißvorrichtung, gemäß Anspruch 1.

Diese Orbitalschweißvorrichtung zeichnet sich dadurch aus, dass der Lagesensor in ortsfester Relativlage zur Rohrhalterung und in beweglicher Relativlage zum Schweißelektrodenhalter angeordnet ist und der Lagewert eine Orientierung der Rohrhalterung bezüglich der Erdanziehungskraft repräsentiert, wobei die elektrische Schaltung oder der Basiscontroller eingerichtet ist, in Abhängigkeit
- des Lagewerts und
- eines Verdrehwertes, welcher die Verdrehung der Schweißelektrode gegenüber der Rohrhalterung repräsentiert, einen Orientierungswert, welcher eine Orientierung der Schwei-ßelektrode oder des Schweißelektrodenhalters gegenüber der Erdanziehungskraft repräsentiert, zu berechnen.

Hierdurch ist die Orientierung der Schweißelektrode berechenbar, obwohl der Lagesensor nicht fest bezüglich der Schweißelektrode angeordnet ist und diese Orientierung fließt dann in die Steuerung oder Regelung des Schweißprozesses ein.

Insbesondere wird diese Aufgabe weiterhin gelöst durch ein Verfahren zum Betreiben einer in einer geschlossenen Bauform ausgebildeten Orbitalschweißvorrichtung, gemäß Anspruch 16.

Dieses Verfahren zeichnet sich dadurch aus, dass der Lagesensor in ortsfester Relativlage zur Rohrhalterung und in beweglicher Relativlage zum Schweißelektrodenhalter angeordnet ist und der Lagewert eine Orientierung der Rohrhalterung bezüglich der Erdanziehungskraft repräsentiert, wobei die elektrische Schaltung oder der Basiscontroller in Abhängigkeit
- des Lagewerts und
- eines Verdrehwertes, welcher die Verdrehung der Schweißelektrode
gegenüber der Rohrhalterung repräsentiert, einen Orientierungswert, welcher eine Orientierung der Schweißelektrode oder des Schweißelektrodenhalters gegenüber der Erdanziehungskraft repräsentiert, berechnen.

Die elektrische Schaltung kann an eine Speichereinrichtung angeschlossen sein, welche der Orbitalschweißkopf aufweist, wobei die elektrische Schaltung eingerichtet ist, einen oder mehrere Belastungswerte und/oder einen oder mehrere Kalibrierwerte in die Speichereinrichtung zu speichern.

Hierdurch wird eine Schweißvorrichtung bereitgestellt, mit der es möglich ist, verschiedene Komfortfunktionen zu realisieren. Entgegen dem für diese Art der geschlossenen Schweißköpfe typischen Bestreben, den Schweißkopf möglichst von allem überflüssigem Ballast freizuhalten, damit eine leichte und schlanke Bauform erreicht wird, wird gemäß der Erfindung der Schweißkopf mit der speziellen Zusatzelektronik versehen, die dem Benutzer den Schweißprozess (weniger Kalibrierung notwendig, erleichterter Start des Schweißprozesses durch Einbeziehung des Lagesensorsignals anstelle alleiniger manueller Vorgabe, mit welcher die Orientierung die Befestigung des Schweißkopfes am Rohr erfolgte) erleichtern. Bei entsprechender Verwendung eines Speichers sind Planung von Wartungsarbeiten besser festlegbar. Denn die spezifische Belastung des Orbitalschweißkopfes oder der Elektrode ist zusammen mit dem Orbitalschweißkopf gespeichert und kann unabhängig von dem Basiscontroller zur Wartung gegeben werden. Durch Speicherung von Kalibrierdaten ersparen sich Benutzer wiederholte Kalibrierfahrten, da die orbitalschweißkopf-spezifischen Kalibrierdaten direkt im Orbitalschweißkopf gespeichert sind.

Bevorzugt hat das Kabel eine Mindestlänge von 1 m, bevorzugt 2m, besonders bevorzugt 5m. Die Rohrhalterung ist bevorzugt eine zangenartige Klemmhalterung. Die Schweißstromquelle ist bevorzugt stationär, während der Orbitalschweißkopf manuell portabel ist.

Die Kammer ist bevorzugt derart ausgestaltet, dass die Rohrstücke, welche aneinandergeschweißt werden sollen, an den zu verbindenden Enden von der Kammer umschlossen sind. Die Kammer weist bevorzugt einen Eingang, z.B. mit einem Schlauchanschluss, für Schutzgas auf, mit welchem die Kammer somit gefüllt werden kann. Die vorher vorhandene Luft wird dabei dann durch die zuvor genannten kleinen Spalte oder Öffnungen aus der Kammer gedrängt. Die Kammer kann auch einen dedizierten Gasausgang aufweisen.

Die Kammer ist bevorzugt derart gestaltet, dass die Schweißelektrode in der Kammer um die zu verschweißenden Rohrstücke gedreht werden kann.

Unter einem Sensor wird erfindungsgemäß eine Einrichtung zur Erfassung einer physikalischen Größe und Umwandlung in ein elektrisches Signal verstanden.

Bevorzugt weist der Orbitalschweißkopf ein Gehäuse auf, welches an die Kammer angrenzt und welches z.B. für einen Benutzer einen Griff oder ein Gehäuse für Bedien- oder Schaltelemente und/oder den Motor bildet, und die elektrische Schaltung ist in dem Gehäuse angeordnet.

Ein Wert ist erfindungsgemäß eine Information über ein bestimmtes Ausmaß einer technischen Größe. Bevorzugt ist der Wert der als Zustand elektrischer Spannungen, Magnetisierungen oder optischer Zustände, bevorzugt digital, verkörpert/codiert. Bevorzugt liegt ein Wert zeitabhängig in Form eines technischen Signals, z.B. ein elektrisches, (elektromagnetisches, optisches und/oder akustisches analoges, bevorzugt digitales Signal vor. Ein Wert und auch ein entsprechendes Signal kann eine oder mehrere Dimensionen aufweisen und somit einen Wertvektor definieren. Ein Messwert ist erfindungsgemäß ein Wert, welcher durch einen Sensor bestimmt wird.

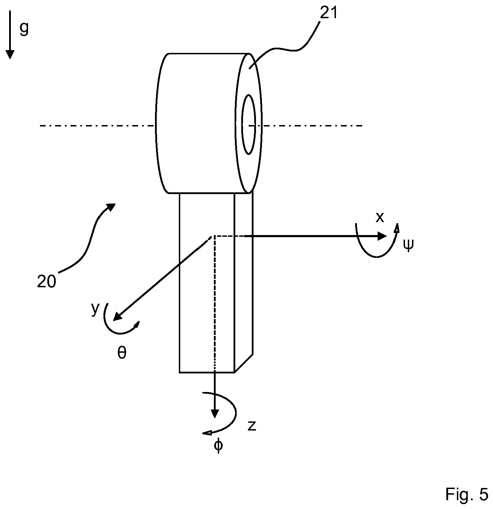

Bevorzugt repräsentiert der Lagewert eine Orientierung a) der Rohrhalterung oder b) der Schweißelektrode oder des Schweißelektrodenhaltersbezüglich der Erdanziehungskraft. Bevorzugt repräsentiert der Lagewert zumindest einen Rollwinkel ψ, besonders bevorzugt zusätzlich einen Nickwinkel θ, ganz besonders bevorzugt auch einen Gierwinkel ϕ (siehe Koordinatensystem in Fig. 5). Vor allem der Rollwinkel ist bei Orbitalschweißen wichtig, da hierdurch die Orientierung der Schweißelektrode zur Schwerkraft maßgeblich beeinflusst wird, da der Nickwinkel θ aufgrund der in den meisten Fällen horizontal verlaufenden Rohre eher in den Hintergrund tritt. Jedoch wird der Nickwinkel wichtig, wenn die zu verschweißenden Rohre schräg verlaufen oder senkrecht.

Bevorzugt umfassen Kalibrierdaten eine oder mehrere aus den Folgenden: Endanschlagsposition, einen oder mehrere Parameter zur Umrechnung von Motoreingangsspannung zu Winkelgeschwindigkeit des Motors oder des Schweißelektrodenhalters oder eines Getriebeteils.

Der Lagesensor ist bevorzugt ein Gyroskop-Sensor. Der Lagesensor ist bevorzugt eingerichtet, eine Lage oder Lageänderung bezüglich mindestens einer, bevorzugt zwei, besonders bevorzugt drei unterschiedlicher Raumachsen zu messen.

Hierdurch wird im Gegensatz zur Positionierung des Lagesensors an der Elektrode eine weiterhin kompakte Bauform des Schweißelektrodenhalters und somit der Kammer ermöglicht und eine elektrische Drehdurchführung vermieden.

Bevorzugt ist der Lagesensor in dem Gehäuse angeordnet.

Der Verdrehwert, ist z.B. eins oder ein Mittelwert aus mehreren der Folgenden: Messwert eines Winkelgebers, Positionswert eines Schrittmotors, Wert einer Recheneinheit, welche die Winkelposition der Elektrode aus Drehgeschwindigkeit und Drehzeit bezüglich einer definierten (z.B. Mittels Endschalter) definierten Position (sog. "Home"-Position.) bestimmt.

Bei einer weiteren Orbitalschweißvorrichtung gemäß der Erfindung ist vorgesehen, dass die elektrische Schaltung eingerichtet ist, den Lagewert oder den gemäß dem vorhergehenden Weitergestaltungsbeispiel berechneten Orientierungswert an den Basiscontroller weiterzuleiten. In einem weiteren erfindungsgemäßen Verfahren erfolgt eine entsprechende Weiterleitung.

Bevorzugt erfolgt die Weiterleitung von der elektrischen Schaltung zu dem Basiscontroller und/oder ein in dieser Beschreibung erwähnter Zugriff von der des Basiscontrollers auf die die Speichereinrichtung oder erwähnte Kommunikation zwischen der elektrischen Schaltung und dem Basiscontroller über eine differentielle Schnittstelle, z.B. CAN oder RS485.

Bei einer weiteren Orbitalschweißvorrichtung gemäß der Erfindung ist vorgesehen, dass der Basiscontroller eingerichtet ist, eine Steuerung oder Regelung eines Schweißprozesses in Abhängigkeit des Lagewertes oder des Orientierungswertes durchzuführen.

In einem weiteren erfindungsgemäßen Verfahren erfolgt eine entsprechende Regelung oder Steuerung.

Hierdurch können die unterschiedlichen Orientierungen, mit denen der Orbitalschweißkopf an das Rohr mittels der Rohrhalterung angebracht werden kann, erkannt werden und im Schweißprozess automatisch kompensiert werden. Beim Orbitalschweißen ist z.B. darauf zu achten, dass sich die Schweißnaht aufgrund der Schwerkraft an verschiedenen Bereichen, wenn die Schweißelektrode um das Rohr fährt, verschiedenartig ausbildet. Da eine gleichmäßige Schweißnaht gewünscht ist, wird daher abhängig von der Lage der Schweißelektrode der Schweißprozess mit unterschiedlichen Parametern durchgeführt.

Bei einer weiteren Orbitalschweißvorrichtung gemäß der Erfindung ist vorgesehen, dass der Basiscontroller eingerichtet ist, ein gespeichertes Schweißprozessprogramm aus einem Speicher zu laden und wobei das Steuern oder Regeln des Schweißprozesses ein Durchlaufen des Schweißprozessprogramms beinhaltet, wobei der Basiscontroller eingerichtet ist, einen Startpunkt, an dem das Durchlaufen des Schweißprozessprogramms beginnt, und bevorzugt einen Endpunkt, an dem das Durchlaufen des Schweißprozessprogramms endet, in Abhängigkeit des Lagewertes zu verschieben.

In einem weiteren erfindungsgemäßen Verfahren erfolgt ein entsprechendes Laden und Verschieben.

Hierdurch kann auf einfache Art und Weise der Lagewert in die Steuerung oder Regelung des Schweißprozesses einbezogen werden.

Das Schweißprozessprogramm beinhaltet bevorzugt eine Tabelle oder Funktion, bei welcher für eine bestimmte Winkelposition der Schweißelektrode relativ zum Schweißelektrodenhalter ein oder mehrere Parameter (z.B. Stromstärke) zur Regelung oder Steuerung der Schweißstromquelle hinterlegt oder berechnet werden.

Bei einer weiteren Orbitalschweißvorrichtung gemäß der Erfindung ist vorgesehen, dass die Orbitalschweißvorrichtung eine Anzeigeeinheit aufweist, welche eingerichtet ist eine graphische Darstellung der Orientierung der Schweißelektrode bezüglich der Erdanziehungskraft darzustellen, wobei die Orbitalschweißvorrichtung eingerichtet ist, die graphische Darstellung in Abhängigkeit Lagewertes, bevorzugt mehrmals innerhalb einer Sekunde, um Änderungen des Lagewertes darzustellen, zu verdrehen und/oder zu verkippen.

In einem weiteren erfindungsgemäßen Verfahren wird eine entsprechende Darstellung entsprechend angezeigt.

Hierdurch kann ein Benutzer die Orientierung auf der Anzeigeeinheit sehen und z.B. korrigieren.

Bei einer weiteren Orbitalschweißvorrichtung gemäß der Erfindung ist vorgesehen, dass die elektrische Schaltung eingerichtet ist,
a) eine Anzahl und/oder eine Dauer und/oder einen Maximalstrom und/oder einen sich über die Zeit, einer elektrischen Ladung entsprechenden, kumulierten Strom der mit der Schwei-ßelektrode oder dem Orbitalschweißkopf durchgeführten Schweißprozesse und/oder Lichtbögen und/oder
b) eine Anzahl von bestimmten, z.B. einen oder verschiedene Schwellwerte überschreitende, Erschütterungen und/oder
c) eine Betriebsdauer des Motors
als den einen oder die mehreren Belastungswerte in der Speichereinrichtung zu speichern.

In einem weiteren erfindungsgemäßen Verfahren wird eine entsprechende Speicherung durchgeführt

Durch diese Belastungswerte ist eine gute Vorhersage von zu erwartenden Teileausfällen möglich.

Bei einer weiteren Orbitalschweißvorrichtung gemäß der Erfindung ist vorgesehen, dass die Orbitalschweißvorrichtung, bevorzugt der Orbitalschweißkopf, einen Belastungssensor aufweist und die elektrische Schaltung oder der Basiscontroller eingerichtet ist, aus einem Messwert des Belastungssensors einen oder mehrere der Belastungswerte zu bestimmen.

In einem weiteren erfindungsgemäßen Verfahren erfolgt eine entsprechende Bestimmung.

Hierdurch sind die Belastungswerte mittels der Orbitalschweißvorrichtung messbar.

Der Belastungssensor weist bevorzugt einen Stromsensor (z.B. Stromsensor des Motorstroms oder des in die Schweißelektrode geleiteten Stroms) und/oder einen Beschleunigungssensor (zur Messung der Erschütterungen) auf. Der Beschleunigungssensor ist bevorzugt ein Lagesensor. Bevorzugt ist es derselbe Sensor, welcher bereits als Lagesensor gemäß den vorangegangenen Weiterführungsbeispielen dient.

Der Belastungssensor besteht bevorzugt aus verschiedenen Elementen, die bevorzugt verteilt im Orbitalschweißkopf und dem Schweißstromquellengehäuse angeordnet sind.

Bei einer weiteren Orbitalschweißvorrichtung gemäß der Erfindung ist vorgesehen, dass der Orbitalschweißkopf den Belastungssensor zumindest teilweise aufweist, und wobei der Orbitalschweißkopf eine Batterie aufweist, und wobei der Orbitalschweißkopf eingerichtet ist, mit Hilfe der durch die Batterie bereitgestellten elektrischen Energie, den Teil des Belastungssensors, welchen der Orbitalschweißkopf aufweist, zu betreiben und einen oder mehrere der Belastungswerte mittels der elektrischen Schaltung in die Speichereinrichtung zu speichern.

In einem weiteren erfindungsgemäßen Verfahren erfolgt ein entsprechendes Betreiben des Belastungssensors und eine entsprechende Speicherung.

Hierdurch werden auch Belastungen des Orbitalschweißkopfs berücksichtigt, welche auftreten, wenn der Orbitalschweißkopf nicht an die Schweißstromquelle angeschlossen ist, z.B. während des Transports oder Lagerung.

Bei einer weiteren Orbitalschweißvorrichtung gemäß der Erfindung ist vorgesehen, dass die elektrische Schaltung eingerichtet ist einen oder mehrere der Belastungswerte von dem Basiscontroller zu empfangen.

In einem weiteren erfindungsgemäßen Verfahren werden mittels der elektrischen Schaltung ein oder mehrere Belastungswerte von dem Basiscontroller empfangen.

Hierdurch können mittels des Basiscontrollers Belastungswerte in die Speichereinrichtung gespeichert werden.

Bei einer weiteren Orbitalschweißvorrichtung gemäß der Erfindung ist vorgesehen, dass der Basiscontroller oder die elektrische Schaltung eingerichtet ist, einen oder mehrere der Belastungswerte, direkt oder mittelbar über die elektrische Schaltung, aus der Speichereinrichtung auszulesen und ein Alarmsignal auszugeben, wenn einer oder mehrere der Belastungswerte einen für den jeweiligen Belastungswert vordefinierten Schwellwert überschreitet.

In einem weiteren erfindungsgemäßen Verfahren erfolgt ein entsprechendes Auslesen und Alarmieren.

Hierdurch wird dem Benutzer die Notwendigkeit einer Wartung oder eines Ersatzes von Teilen signalisiert, wobei es dabei keine Rolle spielt, mit welcher Stromquelle und welchem Basiscontroller zuvor Schweißvorgänge durchgeführt wurden. Der Orbitalschweißkopf kann an verschiedenen Stromquellen betrieben werden, da die Belastungsinformationen direkt im Orbitalschweißkopf gespeichert sind. Das Alarmsignal kann z.B. visuell, haptisch oder akustisch sein. Z.B. ist es eine LED-Anzeige am Orbitalschweißkopf (z.B. blinkende LED) oder der Stromquelle oder ein Pop-Up Fenster auf einem Bildschirm des Orbitalschweißkopfs oder der Stromquelle.

Bei einer weiteren Orbitalschweißvorrichtung gemäß der Erfindung ist vorgesehen, dass der Basiscontroller oder die elektrische Schaltung eingerichtet ist, eine Kalibrierfahrt des Motors durchzuführen und dabei den einen oder die mehreren Kalibrierwerte zu erzeugen. In einem weiteren erfindungsgemäßen Verfahren erfolgt eine entsprechende Kalibrierung und Speicherung.

Hierdurch können Kalibrierwerte durch die Orbitalschweißvorrichtung erzeugt werden.

Bevorzugt ist die elektrische Schaltung eingerichtet, einen oder mehrere der Kalibrierwerte von dem Basiscontroller zu empfangen. Bevorzugt ist der Basiscontroller eingerichtet, einen oder mehrere der Kalibrierwerte, direkt oder mittelbar über die elektrische Schaltung, aus der Speichereinrichtung auszulesen und eine Steuerung oder Regelung eines Schweißprozesses in Abhängigkeit des oder der ausgelesenen Kalibrierwerte durchzuführen.

Bevorzugt wird zur Kalibrierung der Geschwindigkeitsberechnung, d.h. Berechnung der Winkelgeschwindigkeit des Motors oder des Schweißelektrodenhalters oder eines Getriebeteils anhand der Motoreingangsspannung folgende Kalibrierung zur Berechnung von einem oder mehrere Parameter zur Umrechnung von Motoreingangsspannung zu Winkelgeschwindigkeit des Motors oder des Schweißelektrodenhalters oder eines Getriebeteils durchgeführt bzw. ist der Basiscontroller oder die elektrische Schaltung eingerichtet, folgende Kalibrierung durchzuführen:
- Aktivieren des Motors mit einer definierten Spannung u1;
- Detektieren einer bestimmten ersten Winkellage φ1 (z.B. mittels eines Positionsschalters oder Winkelgebers) des Motors oder des Schweißelektrodenhalters oder eines Getriebeteils und Starten einer Zeitmessung bei t1;
- Detektieren einer bestimmten zweiten Winkellage φ2 (z.B. mittels eines Positionsschalters oder Winkelgebers) des Motors oder des Schweißelektrodenhalters oder eines Getriebeteils und Stoppen der Zeitmessung bei t2;
- Berechnen eines Parameters p als den Kalibrierwert zur Umrechnung von Motoreingangspannung u1 in die Winkelgeschwindigkeit ω1 des Motors oder des Schweißelektrodenhalters oder eines Getriebeteils in Abhängigkeit von φ1, φ2, t1 und t2, bevorzugt als p = ϕ 2 - ϕ 1 / t 2 - t 1 .

Erste und zweite Winkellage können durch verschiedene Positionsschalter detektiert werden, besonders bevorzugt jedoch durch einen einzigen Positionsschalter, wobei dann φ2 - φ1 gleich 360° ist.

Bei einer weiteren Orbitalschweißvorrichtung gemäß der Erfindung ist vorgesehen, dass der Basiscontroller oder die elektrische Schaltung eingerichtet ist, ein Alarmsignal (zu bevorzugten Ausgestaltungen eines Alarmsignals siehe oben) auszugeben, wenn sich der eine oder die mehreren Kalibrierwerte (z.B. erzeugt durch eine kurz zuvor durchgeführte erfindungsgemäße Kalibrierfahrt) gegenüber einem oder mehreren bereits in der Speichereinrichtung vorliegenden Kalibrierwerten (z.B. erzeugt durch eine weiter in der Vergangenheit durchgeführte erfindungsgemäße Kalibrierfahrt) über ein vorbestimmtes Maß hinaus unterscheiden. Bei einem weiteren erfindungsgemäßen Verfahren wird entsprechend ein Alarmsignal ausgegeben.

Hierdurch können Verschleißerscheinungen erkannt und dem Benutzer angezeigt werden, so dass z.B. eine vorsorgliche Wartung der Orbitalschweißvorrichtung erfolgen kann. Da die Kalibrierdaten im Schweißkopf gespeichert sind, ist damit eine Schweißkopfspezifische Verschleißerkennung gegeben und es ist nicht zwingend nötig, dass die Kalibrierung immer mit derselben Schweißstromquelle durchgeführt wird. Besonders bevorzugt ist die elektrische Schaltung im Schweißkopf, unabhängig von dem Basiscontroller, eingerichtet, die Kalibrierdaten zu erzeugen und/oder das Alarmsignal auszugeben - damit ist der Schweißkopf hinsichtlich dieser Verschleißerkennung zum Teil oder sogar gänzlich unabhängig von der Schweißstromquelle.

Bevorzugt wird z.B. bei einer ersten Kalibrierfahrt der oben erwähnte Parameters p als Kalibrierwert erzeugt (z.B. vor der ersten Verwendung des Orbitalschweißkopfes) und in die Speichereinheit geschrieben. Nach einer bestimmten Zeit (z.B. einem Jahr) wird wiederum eine Kalibrierfahrt durchgeführt und der neu erzeugte Parameter p_neu wird mit dem bisher gespeicherten Parameter p verglichen. Ist p_neu um einen vorbestimmten Betrag kleiner als p, (z.B. p_neu ≤ 0.75 * p) kann dies z.B. daran liegen, dass das Getriebe verschmutzt ist und deswegen die Winkelgeschwindigkeit bei gleicher Motorspannung niedriger ist als zum Zeitpunkt der ersten Kalibrierfahrt. Durch Ausgeben eines Alarmsignals kann dieser Verschleiß somit durch den Benutzer einfach erkannt werden.

Bei einer weiteren Orbitalschweißvorrichtung gemäß der Erfindung ist vorgesehen, dass der Basiscontroller oder die elektrische Schaltung eingerichtet ist, den Lagewert oder einen Teil des Lagewerts zu Beginn, während oder am Ende eines Schweißvorgangs zu messen und in eine Protokolldatei zu dem Schweißvorgang zu speichern. In einem weiteren erfindungsgemäßen Verfahren erfolgt eine entsprechende Messung und Speicherung.

Hierdurch ist die tatsächliche Orientierung der Schweißnaht und/oder des Rohrs protokollierbar und somit überprüfbar. Somit wird gleichzeitig mit dem Schweißen die Orientierung des Rohrsystems an den verschiedenen Schweißnähten "kartographiert". Besonders bevorzugt wird so z.B. der korrekte Nickwinkel (siehe Fig. 5) bei schrägen (d.h. nicht horizontal) verlaufenden Rohren protokolliert.

Die Erfindung soll nun anhand von Zeichnungen beispielhaft weiter veranschaulicht werden. Hierbei zeigen:
Fig. 1 eine erste Ausführungsform einer erfindungsgemäßen Vorrichtung,
Fig. 2 basierend auf der ersten Ausführungsform eine zweite Ausführungsform einer erfindungsgemäßen Vorrichtung,
Fig. 3 basierend auf der ersten Ausführungsform eine dritte Ausführungsform einer erfindungsgemäßen Vorrichtung,
Fig. 4 basierend auf der ersten, zweiten und dritten Ausführungsform eine vierte Ausführungsform einer erfindungsgemäßen Vorrichtung,
Fig. 5 eine Darstellung eines beispielhaften Koordinatensystems für die Verwendung des Lagesensors.

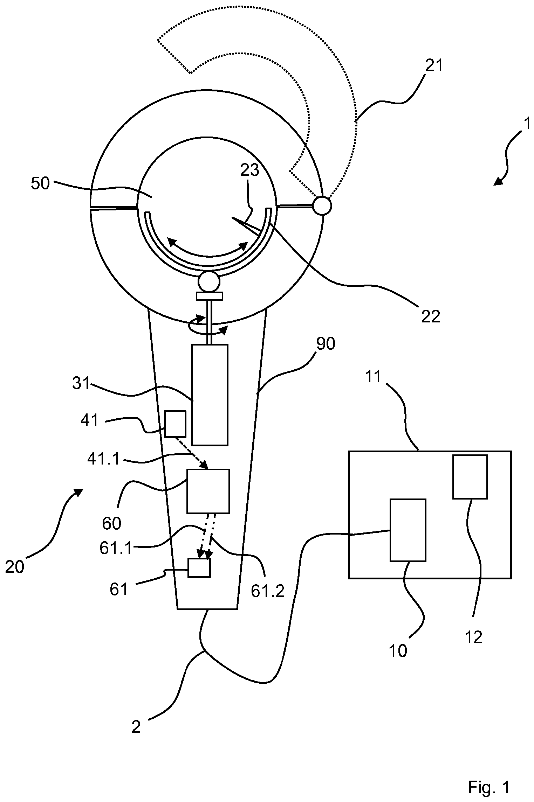

Es folgt eine detailliertere Beschreibung von Fig. 1 . Die Ausgestaltung ist derart, dass die Orbitalschweißvorrichtung 1 eine Schweißstromquelle 10 in einem Schweißstromquellengehäuse 11 und darin einen Basiscontroller 12 aufweist und einen von dem Schweißstromquellengehäuse 11 separaten, an die Schweißstromquelle 10 mittels eines Kabels 2 angeschlossenen Orbitalschweißkopf 20, wobei der Orbitalschweißkopf 20 eine Rohrhalterung 21 und einen gegenüber der Rohrhalterung 21 drehbar gelagerten Schweißelektrodenhalter 22 zur Halterung der Schweißelektrode 23 aufweist, wobei die Orbitalschweißvorrichtung 1 einen, durch den Basiscontroller 12 der Orbitalschweißvorrichtung 1 angesteuerten, elektrischen Motor 31 aufweist, welcher eingerichtet ist, den Schweißelektrodenhalter 22 anzutreiben und ihn so gegenüber der Rohrhalterung 21 zu verdrehen, wobei der Orbitalschweißkopf 20 eine Kammer 50 für Schutzgas aufweist, welche eingerichtet ist, während eines Schweißprozesses eine Schweißelektrode 23 des Orbitalschweißkopfes 20 zu umgeben und nach außen hin im Wesentlichen abzuschließen, wobei der Orbitalschweißkopf 20 eine elektrische Schaltung 60 in Form eines digitalen Controllers aufweist
wobei die elektrische Schaltung 60 angeschlossen ist:
- an einen Lagesensor 41, den der Orbitalschweißkopf 20 in diesem Fall aufweist, wobei der Lagesensor 41 eingerichtet ist, einen Lagewert 41.1 zu erzeugen; und/oder
- an eine Speichereinrichtung 61, welche der Orbitalschweißkopf 20 in diesem Fall aufweist, wobei die elektrische Schaltung 60 eingerichtet ist, einen oder mehrere Belastungswerte 61.1 und/oder einen oder mehrere Kalibrierwerte 61.2 in die Speichereinrichtung 61 zu speichern.

Beim Betrieb der Orbitalschweißvorrichtung (1) ist vorgesehen, dass von der Schweißstromquelle 10 mittels des Kabels 2 Strom an den Orbitalschweißkopf 20 geleitet wird, wobei der Schweißelektrodenhalter 22 mittels des Motors 31 angetrieben und gegenüber der Rohrhalterung 21 des Orbitalschweißkopfs 20 verdreht wird, wobei während eines Schweißprozesses die Schweißelektrode 23 des Orbitalschweißkopfes 20 durch die Kammer 50 für Schutzgas umgeben und nach außen hin im Wesentlichen abgeschlossen wird, wobei die elektrischen Schaltung 60 des Orbitalschweißkopfes 20 betrieben wird,
wobei mittels der elektrischen Schaltung 60:
- der Lagewert 41.1, erzeugt durch den Lagesensor 41, den der Orbitalschweißkopf 20 in diesem Fall aufweist, verarbeitet wird; und/oder
- der eine oder die mehreren Belastungswerte 61.1 und/oder der eine oder die mehreren Kalibrierwerte 61.2 in die Speichereinrichtung 61, welche der Orbitalschweißkopf 20 in diesem Fall aufweist, gespeichert werden.

Je nach Ausgestaltung weist die Vorrichtung 1 den Lagesensor 41 oder den Speicher 61 oder beide auf.

Hier hat das Kabel 2 eine Mindestlänge von 2m. Die Rohrhalterung 21 ist eine zangenartige Klemmhalterung. Die Kammer 50 ist derart ausgestaltet, dass die Rohrstücke, welche aneinandergeschweißt werden sollen, an den zu verbindenden Enden von der Kammer 50 umschlossen sind. Die Kammer 50 weist einen Eingang, z.B. mit einem Schlauchanschluss, für Schutzgas auf, mit welchem die Kammer somit gefüllt werden kann. Die Kammer 50 ist derart gestaltet, dass die Schweißelektrode 23 in der Kammer 50 um die zu verschweißenden Rohrstücke gedreht werden kann. Hier weist der Orbitalschweißkopf 20 ein Gehäuse 90 auf, welches an die Kammer 50 angrenzt und welches z.B. für einen Benutzer einen Griff oder ein Gehäuse für Bedien- oder Schaltelemente und/oder den Motor 31 bildet, und die elektrische Schaltung 60 ist in dem Gehäuse 90 angeordnet.

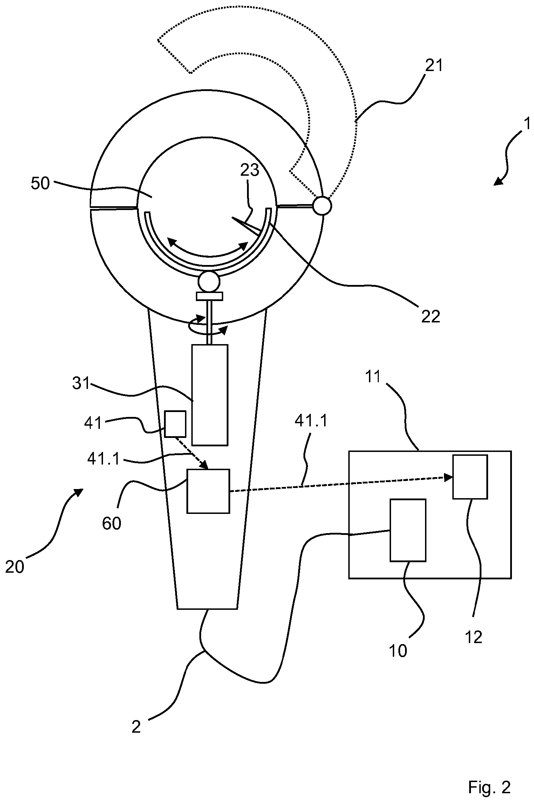

Die Ausgestaltung ist derart, dass der Lagesensor 41 in ortsfester Relativlage zur Rohrhalterung 21 und in beweglicher Relativlage zum Schweißelektrodenhalter 22 angeordnet ist und der Lagewert 41.1 eine Orientierung der Rohrhalterung 21 bezüglich der Erdanziehungskraft repräsentiert. Hier ist der Lagesensor 41 in dem Gehäuse 90 angeordnet. Die Ausgestaltung ist derart, dass die elektrische Schaltung 60 eingerichtet ist,
a) eine Anzahl und/oder eine Dauer und/oder einen Maximalstrom und/oder einen sich über die Zeit, einer elektrischen Ladung entsprechenden, kumulierten Strom der mit der Schwei-ßelektrode 23 oder dem Orbitalschweißkopf 20 durchgeführten Schweißprozesse und/oder Lichtbögen und/oder
b) eine Anzahl von bestimmten, z.B. einen oder verschiedene Schwellwerte überschreitende, Erschütterungen und/oder
c) eine Betriebsdauer des Motors 31
als den einen oder die mehreren Belastungswerte 61.1 in der Speichereinrichtung 61 zu speichern, anders als in Fig. 2 .

Es folgt eine detailliertere Beschreibung von Fig. 2 . Die Ausgestaltung ist derart, dass der Basiscontroller 12 eingerichtet ist, in Abhängigkeit
- des Lagewerts 41.1 und
- eines Verdrehwertes, welcher die Verdrehung der Schweißelektrode 23 gegenüber der Rohrhalterung 21 repräsentiert,

einen Orientierungswert, welcher eine Orientierung der Schweißelektrode 23 oder des Schweißelektrodenhalters 22 gegenüber der Erdanziehungskraft repräsentiert,
zu berechnen. Die Ausgestaltung ist derart, dass die elektrische Schaltung 60 eingerichtet ist, den Lagewert 41.1 an den Basiscontroller 12 weiterzuleiten, wobei der Basiscontroller 12 eingerichtet ist, eine Steuerung oder Regelung eines Schweißprozesses in Abhängigkeit des Lagewertes 41.1 sowie des Orientierungswertes durchzuführen. Die Ausgestaltung ist derart, dass der Basiscontroller 12 eingerichtet ist, ein gespeichertes Schweißprozessprogramm aus einem Speicher zu laden, wobei das Steuern oder Regeln des Schweißprozesses ein Durchlaufen des Schweißprozessprogramms beinhaltet, wobei der Basiscontroller 12 eingerichtet ist, einen Startpunkt, an dem das Durchlaufen des Schweißprozessprogramms beginnt, und einen Endpunkt, an dem das Durchlaufen des Schweißprozessprogramms endet, in Abhängigkeit des Lagewertes 41.1 zu verschieben.

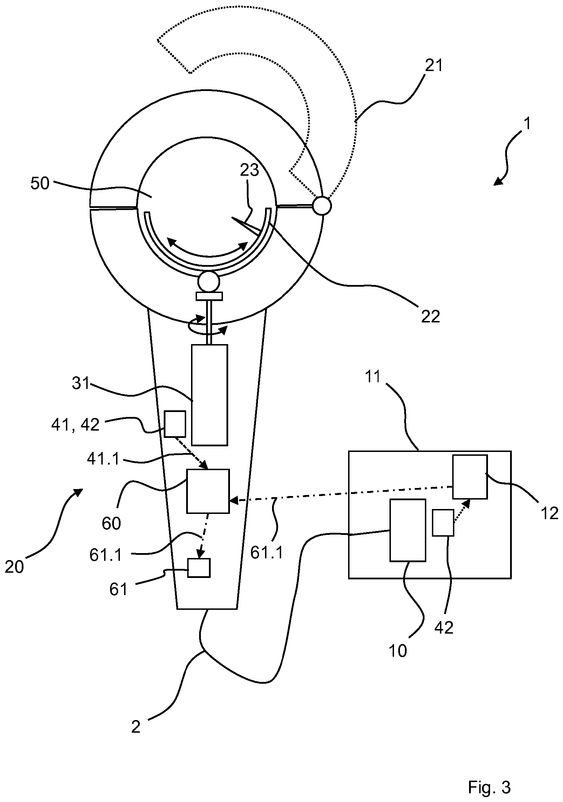

Es folgt eine detailliertere Beschreibung von Fig. 3 . Die Ausgestaltung ist derart, dass die Orbitalschweißvorrichtung 1 einen Belastungssensor 42 aufweist und die elektrische Schaltung 60 sowie der Basiscontroller 12 eingerichtet sind, aus einem Messwert des Belastungssensors 42 einen oder mehrere der Belastungswerte 61.1 zu bestimmen. Der Belastungssensor 42 weist hier einen Stromsensor des Motorstroms und des in die Schweißelektrode geleiteten Stroms und einen Beschleunigungssensor (zur Messung der Erschütterungen) auf. Der Beschleunigungssensor ist hier ein Lagesensor 41. Es ist derselbe Sensor, welcher bereits als Lagesensor 41 gemäß den vorangegangenen Ausführungsbeispielen dient. Der Belastungssensor 42 besteht hier aus verschiedenen Elementen, die verteilt im Orbitalschweißkopf 20 und dem Schweißstromquellengehäuse 11 angeordnet sind. Die Ausgestaltung ist derart, dass die elektrische Schaltung 60 eingerichtet ist, einen oder mehrere der Belastungswerte 61.1 von dem Basiscontroller 12 zu empfangen.

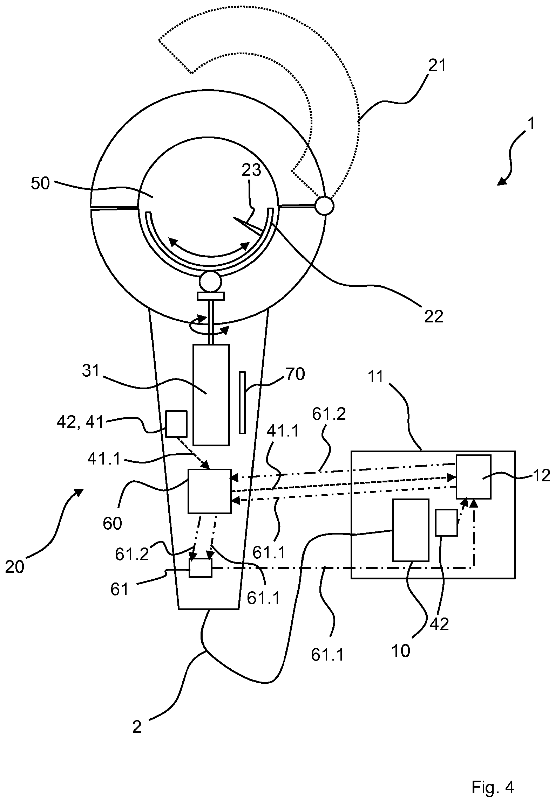

Es folgt eine detailliertere Beschreibung von Fig. 4 . Die Ausgestaltung ist derart, dass der Orbitalschweißkopf 20 den Belastungssensor 42 zumindest teilweise aufweist, wobei der Orbitalschweißkopf 20 eine Batterie 70 aufweist, und wobei der Orbitalschweißkopf 20 eingerichtet ist, mit Hilfe der durch die Batterie 70 bereitgestellten elektrischen Energie, den Teil des Belastungssensors 42, welchen der Orbitalschweißkopf 20 aufweist, zu betreiben und einen oder mehrere der Belastungswerte 61.1 mittels der elektrischen Schaltung 60 in die Speichereinrichtung 61 zu speichern. Die Ausgestaltung ist derart, dass der Basiscontroller 12 eingerichtet ist, einen oder mehrere der Belastungswerte 61.1 aus der Speichereinrichtung 61 auszulesen und ein Alarmsignal auszugeben, wenn einer oder mehrere der Belastungswerte 61.1 einen für den jeweiligen Belastungswert 61.1 vordefinierten Schwellwert überschreitet. Die Ausgestaltung ist derart, dass der Basiscontroller 12 eingerichtet ist, eine Kalibrierfahrt des Motors 31 durchzuführen und dabei den einen oder die mehreren Kalibrierwerte 61.2 zu erzeugen. Hier ist die elektrische Schaltung 60 eingerichtet, einen oder mehrere der Kalibrierwerte 61.2 von dem Basiscontroller 12 zu empfangen. Hier ist der Basiscontroller 12 eingerichtet, einen oder mehrere der Kalibrierwerte 61.2, direkt oder mittelbar über die elektrische Schaltung 60, aus der Speichereinrichtung 61 auszulesen und eine Steuerung oder Regelung eines Schweißprozesses in Abhängigkeit des oder der ausgelesenen Kalibrierwerte 61.2 durchzuführen.

Es folgt eine detailliertere Beschreibung von Fig. 5 . Das Roll-Nick-Gier Koordinatensystem ist hier mit der Lagesensorposition als Ursprungspunkt eingezeichnet. Bevorzugt erfolgt eine rechnerische Translation des Ursprungspunktes auf die Mittelachse der Rohrhalterung (gestrich-punktete Linie).

### Bezugszeichen

1 Orbitalschweißvorrichtung
2 Kabels
10 Schweißstromquelle
11 Schweißstromquellegehäuse
12 Basiscontroller
20 Orbitalschweißkopf
21 Rohrhalterung
22 Schweißelektrodenhalten
23 Schweißelektrode
31 Motor
41 Lagesensor
41.1. Lagesensor
42 Belastungssensor
50 Kammer
60 elektrische Schaltung
61 Speichereinrichtung
61.1. Belastungswert
61.2. Kalibrierwert
70 Batterie
90 Gehäuse

## Patentansprüche

1. Orbitalschweißvorrichtung (1), wobei die in einer geschlossenen Bauform ausgebildete Orbitalschweißvorrichtung (1) eine Schweißstromquelle (10) in einem Schweißstromquellengehäuse (11) und darin oder daran einen Basiscontroller (12) aufweist und einen von dem Schweißstromquellengehäuse (11) separaten, an die Schweißstromquelle (10) mittels eines Kabels (2) angeschlossenen Orbitalschweißkopf (20), wobei der Orbitalschweißkopf (20) eine Rohrhalterung (21) und einen gegenüber der Rohrhalterung (21) drehbar gelagerten Schweißelektrodenhalter (22) zur Halterung der Schweißelektrode (23) aufweist, wobei die Orbitalschweißvorrichtung (1) einen Motor (31) aufweist, welcher eingerichtet ist, den Schweißelektrodenhalter (22) anzutreiben und ihn so gegenüber der Rohrhalterung (21) zu verdrehen, wobei der Orbitalschweißkopf (20) eine Kammer (50) für Schutzgas aufweist, welche eingerichtet ist, während eines Schweißprozesses eine Schweißelektrode (23) des Orbitalschweißkopfes (20) zu umgeben und nach außen hin im Wesentlichen abzuschließen, wobei der Orbitalschweißkopf (20) eine elektrische Schaltung (60) aufweist, die an einen Lagesensor (41) angeschlossen ist, den der Orbitalschweißkopf (20) aufweist, wobei der Lagesensor (41) eingerichtet ist, einen Lagewert (41.1) zu erzeugen,
**dadurch gekennzeichnet, dass** der Lagesensor (41) in ortsfester Relativlage zur Rohrhalterung (21) und in beweglicher Relativlage zum Schweißelektrodenhalter (22) angeordnet ist und der Lagewert (41.1) eine Orientierung der Rohrhalterung (21) bezüglich der Erdanziehungskraft repräsentiert, wobei die elektrische Schaltung (60) oder der Basiscontroller (12) eingerichtet ist, in Abhängigkeit
- des Lagewerts (41.1) und
- eines Verdrehwertes, welcher die Verdrehung der Schweißelektrode (23) gegenüber der Rohrhalterung (21) repräsentiert, einen Orientierungswert, welcher eine Orientierung der Schweißelektrode (23) oder des Schweißelektrodenhalters (22) gegenüber der Erdanziehungskraft repräsentiert, zu berechnen.

2. Orbitalschweißvorrichtung (1) nach Anspruch 1, wobei die elektrische Schaltung (60) an eine Speichereinrichtung (61) angeschlossen ist, welche der Orbitalschweißkopf (20) aufweist, wobei die elektrische Schaltung (60) eingerichtet ist, einen oder mehrere Belastungswerte (61.1) und/oder einen oder mehrere Kalibrierwerte (61.2) in die Speichereinrichtung (61) zu speichern.

3. Orbitalschweißvorrichtung (1) nach Anspruch 1 oder 2, wobei die elektrische Schaltung (60) eingerichtet ist, den Lagewert (41.1) oder den berechneten Orientierungswert an den Basiscontroller (12) weiterzuleiten.

4. Orbitalschweißvorrichtung (1) nach Anspruch 3, wobei der Basiscontroller (12) eingerichtet ist, eine Steuerung oder Regelung eines Schweißprozesses in Abhängigkeit des Lagewertes (41.1) oder des Orientierungswertes durchzuführen.

5. Orbitalschweißvorrichtung (1) nach Anspruch 4, wobei der Basiscontroller (12) eingerichtet ist, ein gespeichertes Schweißprozessprogramm aus einem Speicher zu laden und wobei das Steuern oder Regeln des Schweißprozesses ein Durchlaufen des Schweißprozessprogramms beinhaltet, wobei der Basiscontroller (12) eingerichtet ist, einen Startpunkt, an dem das Durchlaufen des Schweißprozessprogramms beginnt, in Abhängigkeit des Lagewertes (41.1) zu verschieben.

6. Orbitalschweißvorrichtung (1) nach einem der Ansprüche 3 bis 5, wobei die Orbitalschweißvorrichtung (1) eine Anzeigeeinheit aufweist, welche eingerichtet ist eine graphische Darstellung der Orientierung der Schweißelektrode bezüglich der Erdanziehungskraft darzustellen, wobei die Orbitalschweißvorrichtung (1) eingerichtet ist, die graphische Darstellung in Abhängigkeit Lagewertes (41.1) zu verdrehen und/oder zu verkippen.

7. Orbitalschweißvorrichtung (1) nach einem der Ansprüche 1 bis 6, wobei die elektrische Schaltung (60) eingerichtet ist,
a) eine Anzahl und/oder eine Dauer und/oder einen Maximalstrom und/oder einen sich über die Zeit, einer elektrischen Ladung entsprechenden, kumulierten Strom der mit der Schweißelektrode (23) oder dem Orbitalschweißkopf (20) durchgeführten Schweißprozesse und/oder Lichtbögen und/oder
b) eine Betriebsdauer des Motors (31) als den einen oder die mehreren Belastungswerte (61.1) in der Speichereinrichtung (61) zu speichern.

8. Orbitalschweißvorrichtung (1) nach einem der Ansprüche 1 bis 7, wobei die Orbitalschweißvorrichtung (1) einen Belastungssensor (42) aufweist und die elektrische Schaltung (60) oder der Basiscontroller (12) eingerichtet ist, aus einem Messwert des Belastungssensors (42) einen oder mehrere der Belastungswerte (61.1) zu bestimmen, und die elektrische Schaltung (60) eingerichtet ist, eine Anzahl von bestimmten, z.B. einen oder verschiedene Schwellwerte überschreitende, Erschütterungen zu speichern.

9. Orbitalschweißvorrichtung (1) nach Anspruch 8, wobei der Orbitalschweißkopf (20) den Belastungssensor (42) zumindest teilweise aufweist, und wobei der Orbitalschweißkopf (20) eine Batterie (70) aufweist, und wobei der Orbitalschweißkopf (20) eingerichtet ist, mit Hilfe der durch die Batterie (70) bereitgestellten elektrischen Energie, den Teil des Belastungssensors (42), welchen der Orbitalschweißkopf (20) aufweist, zu betreiben und einen oder mehrere der Belastungswerte (61.1) mittels der elektrischen Schaltung (60) in die Speichereinrichtung (61) zu speichern.

10. Orbitalschweißvorrichtung (1) nach einem der Ansprüche 1 bis 9, wobei die elektrische Schaltung (60) eingerichtet ist einen oder mehrere der Belastungswerte (61.1) von dem Basiscontroller (12) zu empfangen.

11. Orbitalschweißvorrichtung (1) nach einem der Ansprüche 1 bis 10, wobei der Basiscontroller (12) oder die elektrische Schaltung (60) eingerichtet ist, einen oder mehrere der Belastungswerte (61.1) aus der Speichereinrichtung (61) auszulesen und ein Alarmsignal auszugeben, wenn einer oder mehrere der Belastungswerte (61.1) einen für den jeweiligen Belastungswert (61.1) vordefinierten Schwellwert überschreitet.

12. Orbitalschweißvorrichtung (1) nach Anspruch 2 oder nach Anspruch 2 und einem der Ansprüche 3-11, wobei der Basiscontroller (12) oder die elektrische Schaltung (60) eingerichtet ist, eine Kalibrierfahrt des Motors (31) durchzuführen und dabei den einen oder die mehreren Kalibrierwerte (61.2) zu erzeugen.

13. Orbitalschweißvorrichtung (1) nach Anspruch 12, wobei der Basiscontroller (12) oder die elektrische Schaltung (60) eingerichtet ist, folgende Kalibrierfahrt durchzuführen:
- Aktivieren des Motors (31) mit einer definierten Spannung u1;
- Detektieren einer bestimmten ersten Winkellage φ1 des Motors (31) oder des Schweißelektrodenhalters (22) oder eines Getriebeteils und Starten einer Zeitmessung bei t1;
- Detektieren einer bestimmten zweiten Winkellage φ2 des Motors (31) oder des Schweißelektrodenhalters (22) oder eines Getriebeteils und Stoppen der Zeitmessung bei t2;
- Berechnen eines Parameters p als den Kalibrierwert zur Umrechnung von Motoreingangspannung u1 in die Winkelgeschwindigkeit ω1 des Motors oder des Schweißelektrodenhalters oder eines Getriebeteils in Abhängigkeit von φ1, φ2, t1 und t2.

14. Orbitalschweißvorrichtung (1) nach Anspruch 2 oder nach Anspruch 2 und einem der Ansprüche 3-13, wobei der Basiscontroller (12) oder die elektrische Schaltung (60) eingerichtet ist, ein Alarmsignal auszugeben, wenn sich der eine oder die mehreren Kalibrierwerte (61.1) gegenüber einem oder mehreren bereits in der Speichereinrichtung (61) vorliegenden Kalibrierwerten über ein vorbestimmtes Maß hinaus unterscheiden.

15. Orbitalschweißvorrichtung (1) nach einem der Ansprüche 1 bis 14, wobei der Basiscontroller (12) oder die elektrische Schaltung (60) eingerichtet ist, den Lagewert (41.1) oder einen Teil des Lagewerts (41.1) zu Beginn, während oder am Ende eines Schweißvorgangs zu messen und in eine Protokolldatei zu dem Schweißvorgang zu speichern.

16. Verfahren zum Betreiben einer Orbitalschweißvorrichtung (1), die in einer geschlossenen Bauform ausgebildet ist, wobei von einer Schweißstromquelle (10) mittels eines Kabels (2) Strom an einen Orbitalschweißkopf (20) geleitet wird, wobei ein Schweißelektrodenhalter (22) mittels eines Motors (31) angetrieben und gegenüber einer Rohrhalterung (21) des Orbitalschweißkopfs (20) verdreht wird, wobei während eines Schweißprozesses eine Schweißelektrode (23) des Orbitalschweißkopfes (20) durch eine Kammer (50) für Schutzgas umgeben und nach außen hin im Wesentlichen abgeschlossen wird, wobei eine elektrischen Schaltung (60) des Orbitalschweißkopfes (20) betrieben wird, um einen Lagewert (41.1) durch einen Lagesensor (41) zu erzeugen,
**dadurch gekennzeichnet, dass** der Lagesensor (41) in ortsfester Relativlage zur Rohrhalterung (21) und in beweglicher Relativlage zum Schweißelektrodenhalter (22) angeordnet ist und der Lagewert (41.1) eine Orientierung der Rohrhalterung (21) bezüglich der Erdanziehungskraft repräsentiert, wobei die elektrische Schaltung (60) oder der Basiscontroller (12) in Abhängigkeit
- des Lagewerts (41.1) und
- eines Verdrehwertes, welcher die Verdrehung der Schweißelektrode (23) gegenüber der Rohrhalterung (21) repräsentiert, einen Orientierungswert, welcher eine Orientierung der Schweißelektrode (23) oder des Schweißelektrodenhalters (22) gegenüber der Erdanziehungskraft repräsentiert, berechnen.

## Claims

1. An orbital welding apparatus (1), wherein the orbital welding apparatus (1) formed in a closed design comprises a welding power source (10) in a welding power source housing (11) and a base controller (12) therein or thereon, and an orbital welding head (20) separate from the welding power source housing (11) connected to the welding power source (10) by means of a cable (2),
wherein the orbital welding head (20) comprises a tube mount (21) and a welding electrode holder (22) rotatably supported opposite the tube mount (21) for mounting a welding electrode (23), wherein the orbital welding apparatus (1) comprises a motor (31), which is configured so as to drive the welding electrode holder (22) and thus rotate it opposite the tube mount (21), wherein the orbital welding head (20) comprises a chamber (50) for inert gas, which is configured so as to surround a welding electrode (23) of the orbital welding head (20) during a welding process and to substantially terminate it outwardly, wherein the orbital welding head (20) comprises an electrical circuit (60) connected to a position sensor (41), which is part of the orbital welding head (20), wherein the position sensor (41) is configured so as to generate a position value (41.1),
**characterized in that** the position sensor (41) is arranged in a stationary position relative to the tube mount (21) and in a movable position relative to the welding electrode holder (22), and the position value (41.1) represents an orientation of the tube mount (21) with respect to the gravitational force, wherein the electrical circuit (60) or the base controller (12) is configured so as to, depending on
- the position value (41.1), and
- a rotational value representing the rotation of the welding electrode (23) in relation to the tube mount (21), calculate an orientation value representing an orientation of the welding electrode (23) or the welding electrode holder (22) in relation to the gravitational force.

2. An orbital welding apparatus (1) according to claim 1, wherein the electrical circuit (60) is connected to a memory device (61), which is part of the orbital welding head (20), wherein the electrical circuit (60) is configured so as to store one or more load values (61.1) and/or one or more calibrated values (61.2) in the memory device (61).

3. The orbital welding apparatus (1) according to claim 1 or 2, wherein the electrical circuit (60) is configured so as to forward the position value (41.1) or the calculated orientation value to the base controller (12).

4. The orbital welding apparatus (1) according to claim 3, wherein the base controller (12) is configured so as to carry out a control or adjustment of a welding process depending on the position value (41.1) or the orientation value.

5. The orbital welding apparatus (1) according to claim 4, wherein the base controller (12) is configured so as to load a stored welding process program from a memory, and wherein the control or adjustment of the welding process includes running through the welding process program, wherein the base controller (12) is configured so as to shift a starting point at which the running of the welding process program begins, depending on the position value (41.1).

6. The orbital welding apparatus (1) according to any one of claims 3 to 5, wherein the orbital welding apparatus (1) comprises a display unit, which is arranged so as to depict a graphical representation of the orientation of the welding electrode in relation to the gravitational force, wherein the orbital welding apparatus (1) is arranged so as to rotate and/or tilt the graphical representation depending on the position value (41.1).

7. The orbital welding apparatus (1) according to any one of claims 1 to 6, wherein the electrical circuit (60) is configured so as to store
a) a number and/or a duration and/or a maximum current and/or a current accumulated over time corresponding to an electrical charge of the welding processes carried out with the welding electrode (23) or the orbital welding head (20) and/or arcs and/or
b) a service life of the engine (31) as the one or more load values (61.1) in the memory device (61).

8. The orbital welding apparatus (1) according to any one of claims 1 to 7, wherein the
orbital welding apparatus (1) comprises a load sensor (42) and the electrical circuit (60) or the base controller (12) is configured so as to determine one or more of the load values (61.1) from a measured value of the load sensor (42), and the electrical circuit (60) is configured so as to store a number of determined vibrations, e.g., exceeding one or various thresholds.

9. The orbital welding apparatus (1) according to claim 8, wherein the orbital welding head (20) at least partially comprises the load sensor (42), and wherein the orbital welding head (20) comprises a battery (70), and wherein the orbital welding head (20) is configured so as to drive the part of the load sensor (42) that is part of the orbital welding head (20) with the aid of the electrical energy supplied by the battery (70) and to store one or more of the load values (61.1) in the memory device (61) by means of the electrical circuit (60).

10. The orbital welding apparatus (1) according to any one of claims 1 to 9, wherein the electrical circuit (60) is configured so as to receive one or more of the load values (61.1) from the base controller (12).

11. The orbital welding apparatus (1) according to any one of claims 1 to 10, wherein the base controller (12) or the electrical circuit (60) is configured so as to read one or more of the load values (61.1) from the memory device (61) and to output an alarm signal when one or more of the load values (61.1) exceeds a threshold predefined for the respective load value (61.1).

12. The orbital welding apparatus (1) according to claim 2 or according to claim 2 and any one of claims 3 to 11, wherein the base controller (12) or the electrical circuit (60) is configured so as to carry out a calibration run of the motor (31), generating the one or more calibration values (61.2).

13. The orbital welding apparatus (1) according to claim 12, wherein the base controller (12) or the electrical circuit (60) is configured so as to carry out the following calibration run:
- activating the motor (31) at a defined voltage u1;
- detecting a particular first angular position φ1 of the motor (31) or the welding electrode holder (22) or a transmission part and starting a time measurement at t1;
- detecting a particular second angular position φ2 of the motor (31) or the welding electrode holder (22) or a transmission part and stopping the time measurement at t2;
- calculating a parameter p as the calibration value for converting motor input voltage u1 into the angular speed w1 of the motor or welding electrode holder or a transmission part as a function of φ1, φ2, 11, and t2.

14. The orbital welding apparatus (1) according to claim 2 or according to claim 2 and any one of claims 3 to 13, wherein the base controller (12) or the electrical circuit (60) is configured so as to output an alarm signal when the one or more calibration values (61.1) differ from one or more calibration values already present in the memory device (61) beyond a specified amount.

15. The orbital welding apparatus (1) according to any one of claims 1 to 14, wherein the base controller (12) or the electrical circuit (60) is configured so as to measure the position value (41.1) or a portion of the position value (41.1) at the start, during, or at the end of a welding operation and to store it in a log file for the welding operation.

16. A method for operating an orbital welding apparatus (1), which is formed in a closed design, wherein current is supplied from a welding power source (10) to an orbital welding head (20) by means of a cable (2), wherein a welding electrode holder (22) is driven by means of a motor (31) and is rotated in relation to a tube mount (21) of the orbital welding head (20), wherein, during a welding process, a welding electrode (23) of the orbital welding head (20) is surrounded by a chamber (50) for inert gas and substantially terminated outwardly, wherein an electrical circuit (60) of the orbital welding head (20) is operated in order to generate a position value (41.1) by a position sensor (41),
**characterized in that** the position sensor (41) is arranged in a stationary position relative to the tube mount (21) and in a movable position relative to the welding electrode holder (22), and the position value (41.1) represents an orientation of the tube mount (21) with respect to the gravitational force, wherein the electrical circuit (60) or the base controller (12) is configured so as to, depending on
- the position value (41.1), and
- a rotational value representing the rotation of the welding electrode (23) in relation to the tube mount (21), calculate an orientation value representing an orientation of the welding electrode (23) or the welding electrode holder (22) in relation to the gravitational force.

## Revendications

1. Appareil de soudage orbital (1), dans lequel l'appareil de soudage orbital (1) formé dans une conception fermée comprend une source d'alimentation de soudage (10) dans un boîtier de source d'alimentation de soudage (11) et un dispositif de commande de base (12) dans celui-ci ou sur celui-ci, et une tête de soudage orbital (20) séparée du boîtier de source d'alimentation de soudage (11) connectée à la source d'alimentation de soudage (10) au moyen d'un câble (2),
dans lequel la tête de soudage orbital (20) comprend un support de tube (21) et un support d'électrode de soudage (22) supporté de manière rotative à l'opposé du support de tube (21) pour le support d'une électrode de soudage (23), dans lequel l'appareil de soudage orbital (1) comprend un moteur (31), qui est configuré de manière à entraîner le support d'électrode de soudage (22) et ainsi à le mettre en rotation à l'opposé du support de tube (21), dans lequel la tête de soudage orbital (20) comprend une chambre (50) pour un gaz inerte, qui est configurée de manière à entourer une électrode de soudage (23) de la tête de soudage orbital (20) durant un processus de soudage et à la terminer sensiblement vers l'extérieur, dans lequel la tête de soudage orbital (20) comprend un circuit électrique (60) connecté à un capteur de position (41), qui fait partie de la tête de soudage orbital (20), dans lequel le capteur de position (41) est configuré de manière à générer une valeur de position (41.1),
**caractérisé en ce que** le capteur de position (41) est agencé dans une position fixe par rapport au support de tube (21) et dans une position mobile par rapport au support d'électrode de soudage (22), et la valeur de position (41.1) représente une orientation du support de tube (21) par rapport à la force de gravité, dans lequel le circuit électrique (60) ou le dispositif de commande de base (12) est configuré de manière à, en fonction de
- la valeur de position (41.1), et
- d'une valeur de rotation représentant la rotation de l'électrode de soudage (23) par rapport au support de tube (21), calculer une valeur d'orientation représentant une orientation de l'électrode de soudage (23) ou du support d'électrode de soudage (22) par rapport à la force de gravité.

2. Appareil de soudage orbital (1) selon la revendication 1, dans lequel le circuit électrique (60) est connecté à un dispositif de mémoire (61), qui fait partie de la tête de soudage orbital (20), dans lequel le circuit électrique (60) est configuré de manière à stocker une ou plusieurs valeurs de charge (61.1) et/ou une ou plusieurs valeurs étalonnées (61.2) dans le dispositif de mémoire (61) .

3. Appareil de soudage orbital (1) selon la revendication 1 ou 2, dans lequel le circuit électrique (60) est configuré de manière à transmettre la valeur de position (41.1) ou la valeur d'orientation calculée au dispositif de commande de base (12).

4. Appareil de soudage orbital (1) selon la revendication 3, dans lequel le dispositif de commande de base (12) est configuré de manière à exécuter une commande ou un ajustement d'un processus de soudage en fonction de la valeur de position (41.1) ou de la valeur d'orientation.

5. Appareil de soudage orbital (1) selon la revendication 4, dans lequel le dispositif de commande de base (12) est configuré de manière à charger un programme de processus de soudage stocké à partir d'une mémoire, et dans lequel le contrôle ou l'ajustement du processus de soudage comprend l'exécution via le programme de processus de soudage, dans lequel le dispositif de commande de base (12) est configuré de manière à décaler un point de départ auquel l'exécution du programme de processus de soudage commence, en fonction de la valeur de position (41.1).

6. Appareil de soudage orbital (1) selon l'une quelconque des revendications 3 à 5, dans lequel l'appareil de soudage orbital (1) comprend une unité d'affichage, qui est agencée de manière à représenter une représentation graphique de l'orientation de l'électrode de soudage par rapport à la force de gravité, dans lequel l'appareil de soudage orbital (1) est agencé de manière à mettre en rotation et/ou incliner la représentation graphique en fonction de la valeur de position (41.1).

7. Appareil de soudage orbital (1) selon l'une quelconque des revendications 1 à 6, dans lequel le circuit électrique (60) est configuré de manière à stocker
a) un nombre et/ou une durée et/ou un courant maximum et/ou un courant accumulé dans le temps correspondant à une charge électrique des processus de soudage exécutés avec l'électrode de soudage (23) ou la tête de soudage orbital (20) et/ou des arcs et/ou
b) une durée de vie du moteur (31) en tant que la ou les valeurs de charge (61.1) dans le dispositif de mémoire (61).

8. Appareil de soudage orbital (1) selon l'une quelconque des revendications 1 à 7, dans lequel
l'appareil de soudage orbital (1) comprend un capteur de charge (42) et le circuit électrique (60) ou le dispositif de commande de base (12) est configuré de manière à déterminer une ou plusieurs parmi les valeurs de charge (61.1) à partir d'une valeur mesurée du capteur de charge (42), et le circuit électrique (60) est configuré de manière à stocker un certain nombre de vibrations déterminées, par exemple, dépassant un ou plusieurs seuils.

9. Appareil de soudage orbital (1) selon la revendication 8, dans lequel la tête de soudage orbital (20) comprend au moins partiellement le capteur de charge (42), et dans lequel la tête de soudage orbital (20) comprend une batterie (70), et dans lequel la tête de soudage orbital (20) est configurée de manière à entraîner la partie du capteur de charge (42) qui fait partie de la tête de soudage orbital (20) à l'aide de l'alimentation électrique fournie par la batterie (70) et à stocker une ou plusieurs parmi les valeurs de charge (61.1) dans le dispositif de mémoire (61) au moyen du circuit électrique (60).

10. Appareil de soudage orbital (1) selon l'une quelconque des revendications 1 à 9, dans lequel le circuit électrique (60) est configuré de manière à recevoir une ou plusieurs parmi les valeurs de charge (61.1) provenant du dispositif de commande de base (12).

11. Appareil de soudage orbital (1) selon l'une quelconque des revendications 1 à 10, dans lequel le dispositif de commande de base (12) ou le circuit électrique (60) est configuré de manière à lire une ou plusieurs parmi les valeurs de charge (61.1) provenant du dispositif de mémoire (61) et à émettre un signal d'alarme lorsqu'une ou plusieurs parmi les valeurs de charge (61.1) dépassent un seuil prédéfini pour la valeur de charge respective (61.1).

12. Appareil de soudage orbital (1) selon la revendication 2 ou selon la revendication 2 et l'une quelconque des revendications 3 à 11, dans lequel le dispositif de commande de base (12) ou le circuit électrique (60) est configuré de manière à exécuter un cycle d'étalonnage du moteur (31), générant la ou les valeurs d'étalonnage (61.2).

13. Appareil de soudage orbital (1) selon la revendication 12, dans lequel le dispositif de commande de base (12) ou le circuit électrique (60) est configuré de manière à effectuer le cycle d'étalonnage suivant :
- l'activation du moteur (31) à une tension définie u1 ;
- la détection d'une première position angulaire particulière φ1 du moteur (31) ou du support d'électrode de soudage (22) ou d'une partie de transmission et le démarrage d'une mesure de temps à t1 ;
- la détection d'une deuxième position angulaire particulière φ2 du moteur (31) ou du support d'électrode de soudage (22) ou d'une partie de transmission et l'arrêt de la mesure de temps à t2 ;
- le calcul d'un paramètre p comme valeur d'étalonnage pour la conversion de la tension d'entrée u1 du moteur en la vitesse angulaire w1 du moteur ou du support d'électrode de soudage ou d'une pièce de transmission en tant que fonction des valeurs de φ1, φ2, t1 et t2.

14. Appareil de soudage orbital (1) selon la revendication 2 ou selon la revendication 2 et l'une quelconque des revendications 3 à 13, dans lequel le dispositif de commande de base (12) ou le circuit électrique (60) est configuré de manière à délivrer un signal d'alarme lorsque la ou les valeurs d'étalonnage (61.1) diffèrent d'une ou plusieurs valeurs d'étalonnage déjà présentes dans le dispositif de mémoire (61) au-delà d'une quantité spécifiée.

15. Appareil de soudage orbital (1) selon l'une quelconque des revendications 1 à 14, dans lequel le dispositif de commande de base (12) ou le circuit électrique (60) est configuré de manière à mesurer la valeur de position (41.1) ou une partie de la valeur de position (41.1) au début, durant ou à la fin d'une opération de soudage et à la stocker dans un fichier journal pour l'opération de soudage.

16. Procédé de fonctionnement d'un appareil de soudage orbital (1), qui est formé dans une conception fermée, dans lequel le courant est fourni à partir d'une source d'alimentation de soudage (10) à une tête de soudage orbital (20) au moyen d'un câble (2), dans lequel un support d'électrode de soudage (22) est entraîné au moyen d'un moteur (31) et est mis en rotation par rapport à un support de tube (21) de la tête de soudage orbital (20), dans lequel, durant un processus de soudage, une électrode de soudage (23) de la tête de soudage orbital (20) est entourée par une chambre (50) pour gaz inerte et terminée sensiblement vers l'extérieur, dans lequel un circuit électrique (60) de la tête de soudage orbital (20) est actionné afin de générer une valeur de position (41.1) par un capteur de position (41), **caractérisé en ce que** le capteur de position (41) est agencé dans une position fixe par rapport au support de tube (21) et dans une position mobile par rapport au support d'électrode de soudage (22), et la valeur de position (41.1) représente une orientation du support de tube (21) par rapport à la force de gravité, dans lequel le circuit électrique (60) ou le dispositif de commande de base (12) est configuré de manière à, en fonction de
- la valeur de position (41.1), et
- d'une valeur de rotation représentant la rotation de l'électrode de soudage (23) par rapport au support de tube (21), calculer une valeur d'orientation représentant une orientation de l'électrode de soudage (23) ou du support d'électrode de soudage (22) par rapport à la force de gravité.
